Europäisches Patentamt

European Patent Office

Office européen des brevets

(19)

(11) Numéro de publication: **0 219 383**
**B1**

(12) **FASCICULE DE BREVET EUROPEEN**

(45) Date de publication du fascicule du brevet:
**11.04.90**

(21) Numéro de dépôt: **86401972.4**

(22) Date de dépôt: **09.09.86**

(51) Int. Cl.⁴: **B01D 39/20**, B01D 67/00,
C04B 38/00

(54) **Utilisation de poudres frittables de carbure de silicium de granulométrie particulière dans la réalisation d'éléments de filtration en céramique poreuse, et céramiques ainsi obtenues.**

(30) Priorité: **09.09.85 FR 8513379**

(43) Date de publication de la demande:
**22.04.87 Bulletin 87/17**

(45) Mention de la délivrance du brevet:
**11.04.90 Bulletin 90/15**

(84) Etats contractants désignés:
**AT BE CH DE GB IT LI LU NL SE**

(56) Documents cités:
**EP-A- 0 076 781
DE-A- 3 149 796
FR-A- 1 173 689
FR-A- 2 380 999
FR-A- 2 463 636
FR-A- 2 549 736
US-A- 2 021 520**

(73) Titulaire: **CENTRE NATIONAL DE LA RECHERCHE
SCIENTIFIQUE (CNRS), 15, Quai Anatole France,
F-75007 Paris(FR)**

(72) Inventeur: **Cot, Louis, Résidence Les Pins Clapiers,
F-34170 Casteinau les Lez(FR)**
Inventeur: **Guizard, Christian Gilbert, Rue des Remparts
Puechabon, F-34150 Gignac(FR)**
Inventeur: **Larbot, André, 940, rue du Ravin d'Embarre,
F-34980 Saint Clement la Riviere(FR)**
Inventeur: **Guglermotte, Francis, Mas de la Tullière St
Jean de Cornies, F-34160 Castries(FR)**

(74) Mandataire: **Nony, Michel et al, Cabinet NONY &
CIE, 29, rue Cambacérès, F-75008 Paris(FR)**

## Description

La présente invention a pour objet l'utilisation de mélanges de poudres frittables de granulométries différentes dans la préparation d'un élément de filtration comprenant un support macroporeux en céramique poreuse, la préparation de tels éléments de filtration, et les éléments de filtration ainsi obtenus.

On sait que l'on utilise actuellement comme éléments filtrants, notamment dans les opérations d'ultrafiltration et de stérilisation, des membranes organiques déposées sur des supports poreux. Il est connu que de telles membranes organiques présentent plusieurs inconvénients. En particulier elles ont une faible résistance mécanique. En outre, elles sont très sensibles aux traitements chimiques ou thermiques, ce qui rend difficile leur nettoyage et leur stérilisation.

Dans la demande de brevet FR-A 2 502 508 on a proposé de réaliser des structures de filtration constituées par un support poreux en matériau fritté à grains relativement gros portant une couche filtrante plus mince en un matériau fritté à grains relativement fins. Le support poreux est préparé par mélange d'une poudre frittable avec un agent de frittage constitué par un verre, mais on obtient alors un support poreux ayant une résistance chimique relativement faible en raison de la présence d'une phase vitreuse de silice aux joints de grains.

On sait qu'il est possible de préparer des céramiques, sans agents de frittage tels que des verres, mais alors la cuisson doit être effectuée à des températures très élevées.

La présente invention, qui a été faite au Laboratoire de physicochimie des Matériaux (U.A. 407-CNRS) de l'Ecole Nationale Supérieure de Chimie de Montpellier, a pour objet la réalisation d'éléments de filtration comprenant un support macroporeux en céramique de carbure de silicium en effectuant un frittage à température relativement basse, en l'absence d'un agent de frittage, grâce à l'emploi de mélanges de poudres de granulométries différentes. On peut ainsi réaliser des économies d'énergie importantes et utiliser des fours de modèle courant.

Dans le document DE-A 3 149 796, on décrit la préparation de céramiques poreuses obtenues par frittage d'un mélange de grosses et de fines particules de carbure de bore. Le frittage est effectué à 2050°C, soit 300°C en-dessous de la température de fusion du carbure de bore (2350°C).

Dans le procédé de la présente demande, on prépare des céramiques poreuses par frittage d'un mélange de grosses et de fines particules de carbure de silicium. Le frittage peut, de façon surprenante, être effectué par exemple à 1100°C, soit 1600°C en dessous de la température de fusion du carbure de silicium (2700°C).

La présente invention a plus précisément pour objet l'utilisation dans la préparation d'un élément de filtration comprenant un support macroporeux en céramique, de poudres frittables constituées par un mélange de particules ayant deux granulométries différentes, caractérisée par le fait que lesdites poudres frittables, en carbure de silicium, sont constituées par un mélange de particules ayant une granulométrie inférieure à 1 micromètre et de particules ayant une granulométrie supérieure ou égale à 5 micromètres, la proportion des particules de granulométrie inférieure à 1 micromètre étant de 10 à 20% en masse par rapport à la masse totale de particules.

La proportion des particules de granulométrie inférieure à 1 micromètre est de 10 à 20% en masse, par rapport à la masse totale des particules. Une proportion supérieure n'est pas avantageuse.

De préférence, le rapport de la dimension moyenne des particules de granulométrie supérieure ou égale à 5 micromètres à la dimension moyenne des particules de granulométrie inférieure à 1 micromètre est au moins égal à 8.

Les particules de granulométrie au moins égale à 5 micromètres ont par exemple des dimensions pouvant aller de 5 à 50 micromètres, et de préférence de 5 à 25 micromètres. Pour les particules ayant des dimensions extrêmes des particules de 5 à 50, et en particulier de 5 à 25 micromètres, la dispersion des tailles de particules ne joue pas un rôle déterminant.

L'invention a également pour objet un procédé de préparation d'un élément de filtration en céramique poreuse, dans lequel on utilise un mélange de poudres frittables ayant deux granulométries differentes, caractérisé par le fait que l'on mélange des poudres frittables en carbure de silicium constituées par un mélange de particules ayant une granulométrie inférieure à 1 micromètre et de particules ayant une granulométrie supérieure ou égale à 5 micromètres, la proportion des partiules de granulométrie inférieure à 1 micromètre étant de 10 à 20% en masse par rapport à la masse totale des particules, avec un agent liant et un véhicule liquide, de façon à obtenir une pâte, qui l'on met en forme ladite pâte, et qu'on la cuit jusqu'à obtention de la structure poreuse désirée.

Pour préparer la pâte, on opère selon les techniques connues, en mélangeant la poudre avec des liants ou plastifiants organiques qui seront éliminés lors de la cuisson, et éventuellement un véhicule liquide tel que de l'eau additionnée ou non d'un lubrifiant.

La proportion de liants ou plastifiants dans la pâte est par exemple de 5 à 20% en masse, et la proportion de véhicule liquide de 15 à 35%.

La mise en forme de la pâte (plaques, tubes, tubes multicanaux) est effectuée selon les méthodes connues.

Le séchage peut être effectué soit à l'air libre, soit en atmosphère humide contrôle.

La température de cuisson varie avec le matériau de départ. Elle est généralement de l'ordre de 1000 à 1300°C.

Grâce à l'utilisation de poudres de granulométries différentes, il est donc possible d'effectuer la cuisson à des températures relativement basses malgré l'absence d'un agent de frittage tel qu'un verre.

Si l'on souhaite éviter de modifier la compostion chimique de la poudre de départ, on effectue la cuisson en atmosphère inerte.

Dans le cas du carbure de silicium, en atmosphère inerte, ce sont les petits grains qui assurent le frittage, alors qu'en atmosphère oxydante, c'est la silice issue de l'oxydation partielle des petits grains qui assure le frittage entre les grains de grosse granulométrie. et qui enrobe en outre ces gros grains (cet enrobage est visible en microscopie électronique).

En outre, si désiré, on applique sur ladite céramique cuite une couche superficielle d'une suspension liquide contenant une poudre frittable dont au moins 95% en masse des particules ont une granulométrie inférieure à 1 micromètre et dont au moins 50% en masse ont une granulométrie inférieure à 0,5 micromètre, et l'on procède à une seconde cuisson pour obtenir un élément de filtration constitué par une couche mince filtrante déposée sur un support macroporeux.

La préparation et l'application de la barbotine sont effectuées de façon connue; voir par exemple les demandes de brevets citées précédemment. La température de cuisson de la couche fitrante microporeuse est du même ordre de grandeur que la température de cuisson du support macroporeux.

Bien entendu, il est possible de réaliser, entre le support et la couche filtrante, une ou plusieurs couches intermédiaires.

L'invention a également pour objet un élément de filtration en céramique de carbure de silicium, caractérisé par le fait qu'il comprend une structure poreuse qui apparaît en microscopie électronique à balayage sous la forme de gros grains ayant des dimensions au moins égales à 5 micromètres, lesdits gros grains étant non enrobés et ayant conservé l'aspect des particules utilisées pour la préparation de la céramique, et lesdits gros grains étant réliés par des joints de grains discontinus ayant l'aspect de petits grains de dimension inférieure à 1 micromètre, lesdits petits grains ayant une structure cristalline. La poudre composée de particules de dimensions inférieures à 1 micromètre, utilisée dans la préparation de l'élément de filtration, a la même compostion que la poudre formée de particules ayant des dimensions supérieures ou égales à 5 micromètres, et les joints de grains ont la même compostion que les gros grains dans le produit final.

Généralement, les dimensions des gros grains peuvent aller de 5 à 50 micromètres, et de préférence de 5 à 25 micromètres.

De tels éléments de filtration sont obtenus selon le procédé décrit précédemment, en effectuant, si nécessaire, la cuisson en atmosphère inerte.

Les exemples suivants illustrent l'invention sans toutefois la limiter. Dans ces exemples, les mesures de porosité et de diamètre des pores sont effectuées au porosimètre à mercure.

EXEMPLE 1 - Support macroporeux

a) On procède au mélange des produits suivants (les quantités sont données en pourcentage pondéral) :

- CSi (0,5μm) : 10
- CSi (10 μm) : 75
- Alcool polyvinylique : 5
- Amigel : 5

- Méthocel : 5

Amigel est une marque commerciale pour un amidon prégélatinisé. Ce produit est commercialisé par la Société des Produits du Maïs (92140 CLARMART-FRANCE).

Méthocel est une marque commerciale pour la méthyl cellulose. Ce produit est commercialisé par la Société Lambert-Rivière (13240 SEPTEMES-LES - VALLONS - FRANCE).

b) Malaxage :

L'eau ajoutée représente 32 % de la masse des produits cités ci-dessus ; 20% sont ajoutés lors du mélange et 12 % lors du malaxage.

c) Mise en forme :

La pâte obtenue est extrudée de façon à lui donner la forme d'un tube ayant les dimensions suivantes : longueur 15 cm, diamètre intérieur 16 mm, diamètre extérieur 21 mm.

d) Séchage :

On sèche la pâte à l'air, à une température de 25°C.

c) Cuisson :

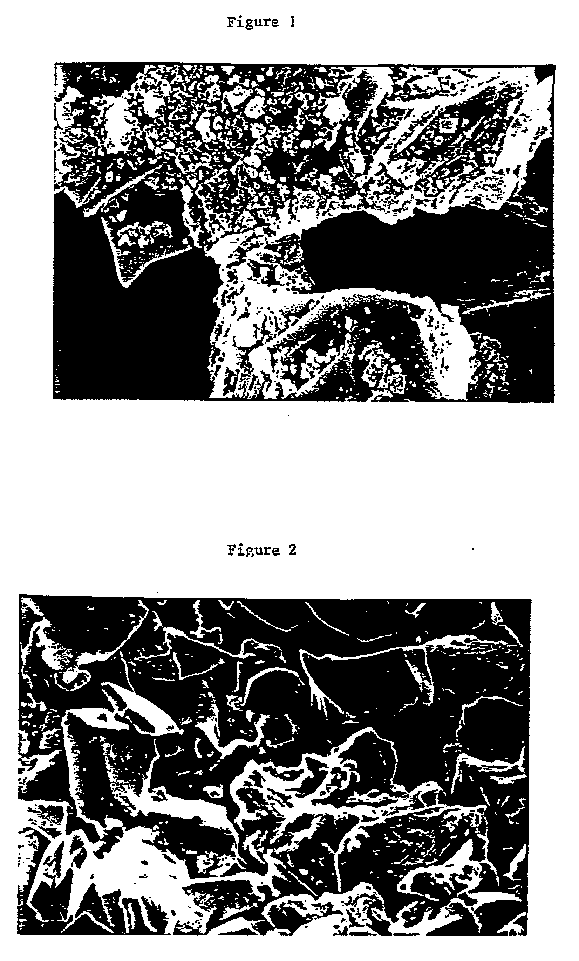

On procède à une calcination à 1100°C sous azote.
Caractéristiques du produit obtenu :
diamètre des pores : 8 μm
volume poreux : 35 %
Aspect en microscopie électronique à balayage : voir la figure 1 annexée (grossissement : 6800)

L'analyse des joints de grains à la sonde de Castaing montre que ceux-ci sont constituées de carbure de silicium, tout comme les gros grains majoritaires.

Les supports poreux préparés de façon analogue mais calcinés sous atmosphère oxydante (à l'air) présentent des caractéristiques de porosité analogues. Toutefois, l'aspect des grains, en microscopie électronique à balayage, est différent, comme le montre la figure 2 annexée (grossissement : 1500). On voit que les gros grains sont enrobés, et on note la quasi-absence de petits grains. Cet enrobage provient de la formation de silice.

EXEMPLE 2 - Couche mince filtrante sur support macroporeux.

On réalise une suspension avec les éléments suivants : (en % pondéral)
H₂O distillée : 52,34
CSi 0,5 μm : 10
alcool polyvinylique : 18,75
défloculant : 0,16

Après despersion et homogénéisation des poudres et du défloculant dans l'eau, on ajoute l'alcool polyvinylique.
On applique la suspension à l'intérieur du tube décrit dans l'exemple 1, en emplissant le tube à l'aide de la suspension, selon le principe des vases communicants, puis en vidant le tube de la même façon.

Après séchage, on procède à une calcination à 1050°C (sous azote).

Caractéristiques de la couche :

épaisseur = 10 à 12 μm
Diamètre des pores :
0,15 - 0.20 μm
Volume poreux : 30 %
Perméabilité à l'eau : 1200 1/h/m²/bar
On rappelle que 1 bar = 10⁵ Pa

Les couches filtrantes préparées de façon analogue mais calcinées sous atmosphère oxydante ont les mêmes caractéristiques de porosité que celles calcinées sous atmosphère inerte. Néanmoins, elle présentent une résistance chimique affaiblie du fait de la présence de SiO₂.

De façon analogue à celle décrite à l'exemple 1, on a préparé des supports d'éléments de filtration avec les mélanges de poudres mentionnés ci-après.

EXEMPLE 3

Support macroporeux : mélange de grains de CSi

12 % à 0,5 μm
88 % à 5 μm
Calcination à 1100°C (sous azote)

Caractéristiques du support :

Tube de longueur de 15 cm, diamètre intérieur 16 mm, diamètre extérieur 21 mm.
Diamètre des pores : 5 μm
Volume poreux : 30%

EXEMPLE 4

Couche filtrante sur support macroporeux

On opère de façon analogue à celle décrite à l'exemple 2, mais en utilisant 6% de CSi 0,5 μm
Calcination à 1100°C (sous azote)
La couche filtrante est déposée à l'intérieur du support de l'exemple 3.

Caractéristiques :

Epaisseur de la couche : 5 μm
Diamètre des pores : 0,15 μm
Volume poreux : 30 %
Débit à l'eau : 1.500 1/h/m²/bar

**Revendications**

1. Utilisation, dans la préparation d'un élément de filtration comprenant un support macroporeux en céramique, de poudres frittables constituées par un mélange de particules ayant deux granulométries différentes, caractérisée par le fait que lesdites poudres frittables, en carbure de silicium, sont constituées par un mélange de particules ayant une granulométrie inférieure à 1 micromètre et de particules ayant une granulométrie supérieure ou égale à 5 micromètres, la proportion des particules de granulométrie inférieure à 1 micromètre étant de 10 à 20% en masse par rapport à la masse totale des particules.

2. Utilisation selon la revendication 1, caractérisée par le fait que les particules ayant une granulométrie supérieure ou égale à 5 micromètres ont des dimensions de 5 à 50 micromètres.

3. Utilisation selon l'une quelconque des revendications 1 et 2, caractérisée par le fait que le rapport de la dimension moyenne des particules de granulométrie supérieure ou égale à 5 micromètres à la dimension moyenne des particules de granulométrie inférieure à 1 micromètre est au moins égale à 8.

4. Procédé de préparation d'un élément de filtration en céramique poreuse, dans lequel on utilise un mélange de poudres frittables ayant deux granulométrie différentes, caractérisé par le fait que l'on mélange des poudres frittables en carbure de silicium constituées par un mélange de particules ayant une granulométrie inférieure à 1 micromètre et de particules ayant une granulométrie supérieure ou égale à 5 micromètre, la proportion des particules de granulométrie inférieure à 1 micromètre de 10 à 20% en masse par rapport à la masse totale des particules, avec un agent liant et un véhicule liquide, de façon à obtenir une pâte, que l'on met en forme ladite pâte, et qu'on la cuit jusqu'à obtention de la structure poreuse désireé.

5. Procédé selon la revendication 4, caractérisé par le fait qu'en outre, on applique sur ladite céramique cuite une couche d'une suspension liquide contenant une poudre frittable dont au moins 95% en masse des particules ont une granulométrie inférieure à 1 micromètre et dont au moins 50% en masse ont une granulométrie inférieure à 0,5 micromètre, et que l'on procède à une seconde cuisson pour obtenir un élément de filtration constitué par une couche mince filtrante déposée sur un support macroporeux.

6. Elément de filtration en céramique, caractérisé par le fait qu'il est préparé selon le procédé de l'une quelconque des revendications 4 et 5.

**Claims**

1. Use, in the preparation of a filter element containing a macroporous ceramic support, of sinterable powders consisting of a mixture of particles having two different particle size distributions, characterized by the fact that the said sinterable powders, of silicon carbide, consist of a mixture of particles having a particle size of less than 1 micrometre and of particles having a particle size of greater than or equal to 5 micrometres, the proportion of particles having a particle size of less than 1 micrometre being from 10 to 20 % by mass relative to the total mass of the particles.

2. Use according to Claim 1, characterized by the fact that the particles having a particle size of greater than or equal to 5 micrometres have sizes of from 5 to 50 micrometres.

3. Use according to either of Claims 1 and 2, characterized by the fact that the ratio of the average size of the particles having a particle size of greater than or equal to 5 micrometres to the average size of the particles having a particle size of less than 1 micrometre is at least equal to 8.

4. Process for the preparation of a porous ceramic filter element, in which a mixture of sinterable powders having two different particle size distributions is used, characterized by the fact that sinterable powders of silicon carbide consisting of a mixture of particles having a particle size of less than 1 micrometre and of particles having a particle size of greater than or equal to 5 micrometres, the proportion of particles having a particle size of less than 1 micrometre being from 10 to 20 % by mass relative to the total mass of the particles, are mixed with a binding agent and a liquid vehicle so as to obtain a paste, that the said paste is shaped and that it is baked until the desired porous structure is obtained.

5. Process according to Claim 4, characterized by the fact that, in addition, a layer of a liquid suspension containing a sinterable powder in which at least 95 % by mass of the particles have a particle size of less than 1 micrometre and in which at least 50 % by mass have a particle size of less than 0.5 micrometre is applied to the said baked ceramic and that a second baking is carried out to obtain a filter element consisting of a thin filter layer arranged on a macroporous support.

6. Ceramic filter element, characterized by the fact that it is prepared according to the process of either of Claims 4 and 5.

**Patentansprüche**

1. Verwendung von sinterfähigen Pulvern, die aus einem Gemisch von Teilchen zusammengesetzt sind, welche zwei verschiedene Kornabmessungen aufweisen, bei der Herstellung eines Filtrierelements, das einen makroporösen keramischen Träger enthält, dadurch gekennzeichnet, daß die sinterfähigen Pulver aus Siliciumcarbid aus einem Gemisch von Teilchen bestehen, die eine Korngröße unter 1 Mikrometer haben und von Teilchen, die eine Korngröße über oder gleich 5 Mikrometer haben, wobei der Mengenanteil der Teilchen einer Korngröße unter 1 Mikrometer 10 bis 20%, bezogen auf die Gesamtmenge der Teilchen, beträgt.

2. Verwendung nach Anspruch 1, dadurch gekennzeichnet, daß die Teilchen, die eine Korngröße über oder gleich 5 Mikrometer haben, in den Dimensionen von 5 bis 50 Mikrometer liegen.

3. Verwendung nach den Ansprüchen 1 und 2, dadurch gekennzeichnet, daß das Verhältnis der mittleren Dimension der Korngröße über oder gleich 5 Mikrometer zur mittleren Dimension der Korngröße unter 1 Mikrometer mindestens gleich 8 beträgt.

4. Verfahren zur Herstellung eines keramischen porösen Filterelements, wobei man ein Gemisch von sinterfähigen Pulvern, die zwei unterschiedliche Korngrößen haben, verwendet, dadurch gekennzeichnet, daß man ein Gemisch der sinterfähigen Pulver aus Siliciumcarbid, bestehend aus einem Gemisch von Teilchen, die eine Korngröße unter 1 Mikrometer haben und Teilchen, die eine Korngröße über oder gleich 5 Mikrometer haben, und 10 bis 20% Menge, bezogen auf die Gesamtmenge der Teilchen betragen, und einem Bindemittel und einem flüssigen Träger bis zum Erkalten einer Paste vermischt, daß man diese Paste in eine Form bringt, und daß man diese bis zum Erzielen der gewünschten porösen Struktur brennt.

5. Verfahren nach Anspruch 4, dadurch gekennzeichnet, daß man außerdem an die gebrannte Keramik ein Bett aus einer flüssigen Suspension aufbringt, die ein sinterbares Pulver enthält, wovon mindestens 95% der Menge der Teilchen eine Korngröße unter 1 Mikrometer hat und mindestens 50% der Menge eine Korngröße unter 0,5 Mikrometer hat und wobei man einen zweiten Brand zur Erzielung eines Filterelements durchführt, das aus einer dünnen Filtrierschicht, die auf einem makroporösen Träger abgelagert ist, zusammengesetzt ist.

6. Keramisches Filterelement, dadurch gekennzeichnet, daß es nach einem Verfahren gemäß den Ansprüchen 4 und 5 hergestellt worden ist.

Figure 1

Figure 2